(19) Europäisches Patentamt European Patent Office Office européen des brevets

(11) **EP 2 876 302 B1**

(12) **FASCICULE DE BREVET EUROPEEN**

(45) Date de publication et mention de la délivrance du brevet:
**23.10.2019 Bulletin 2019/43**

(51) Int Cl.:
**F03D 17/00** *(2016.01)* **F03D 7/04** *(2006.01)*

(21) Numéro de dépôt: **14306720.5**

(22) Date de dépôt: **28.10.2014**

(54) **PROCÉDÉ DE CONTRÔLE ET DE SURVEILLANCE D'UNE ÉOLIENNE AU MOYEN D'UNE ESTIMATION DE LA VITESSE DU VENT AU MOYEN D'UN CAPTEUR LIDAR**

KONTROLL- UND ÜBERWACHUNGSVERFAHREN EINER WINDKRAFTANLAGE ANHAND EINER WINDGESCHWINDIGKEITSSCHÄTZUNG MIT HILFE EINES LIDAR-SENSORS

METHOD FOR CONTROLLING AND MONITORING A WIND TURBINE BY ESTIMATING WIND SPEED USING A LIDAR SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.11.2013 FR 1361600**

(43) Date de publication de la demande:
**27.05.2015 Bulletin 2015/22**

(73) Titulaire: **IFP Energies nouvelles
92500 Rueil-Malmaison (FR)**

(72) Inventeurs:
- **Bayon, Benoît
  69400 Gleize (FR)**
- **Chauvin, Jonathan
  75017 Paris (FR)**

(74) Mandataire: **IFP Energies nouvelles
Département Propriété Industrielle
Rond Point de l'échangeur de Solaize
BP3
69360 Solaize (FR)**

(56) Documents cités:
**EP-A1- 2 581 761    US-A1- 2012 179 376**

- **LAKS JASON ET AL: "A spectral model for evaluating the effect of wind evolution on wind turbine preview control", 2013 AMERICAN CONTROL CONFERENCE, IEEE, 17 juin 2013 (2013-06-17), pages 3673-3679, XP032476148, ISSN: 0743-1619 ISBN: 978-1-4799-0177-7 [extrait le 2013-08-14]**
- **DAVID SCHLIPF ET AL: "Comparison of feedforward and model predictive control of wind turbines using LIDAR", DECISION AND CONTROL (CDC), 2012 IEEE 51ST ANNUAL CONFERENCE ON, IEEE, 10 décembre 2012 (2012-12-10), pages 3050-3055, XP032323824, DOI: 10.1109/CDC.2012.6426063 ISBN: 978-1-4673-2065-8**

**EP 2 876 302 B1**

**Description**

La présente invention concerne le domaine des énergies renouvelables et concerne plus particulièrement la mesure de la ressource des éoliennes, le vent, dans des objectifs de contrôle de l'éolienne (orientation, régulation de couple et de vitesse).

Une éolienne permet de transformer l'énergie cinétique du vent en énergie électrique ou mécanique. Pour la conversion du vent en énergie électrique, elle se compose des éléments suivants :

- un mât permettant de placer un rotor à une hauteur suffisante pour permettre son mouvement (nécessaire pour les éoliennes à axe horizontal) ou de placer ce rotor à une hauteur lui permettant d'être entraîné par un vent plus fort et régulier qu'au niveau du sol. Le mât abrite généralement une partie des composants électriques et électroniques (modulateur, commande, multiplicateur, générateur, ...) ;

- une nacelle montée au sommet du mât, abritant des composants mécaniques, pneumatiques, certains composants électriques et électroniques, nécessaires au fonctionnement de la machine. La nacelle peut tourner pour orienter la machine dans la bonne direction ;

- un rotor, fixé à la nacelle, comprenant plusieurs pales (en général trois) et le nez de l'éolienne. Le rotor est entraîné par l'énergie du vent, il est relié par un arbre mécanique directement ou indirectement (via un système de boite de vitesse et d'arbre mécanique) à une machine électrique (générateur électrique...) qui convertit l'énergie recueillie en énergie électrique. Le rotor est potentiellement doté de systèmes de contrôle tels que des pâles à angle variable ou des freins aérodynamiques;

- une transmission, composée de deux axes (arbre mécanique du rotor et arbre mécanique de la machine électrique) reliés par une transmission (boite de vitesse).

Depuis le début des années 1990, l'énergie éolienne a connu un regain d'intérêt, en particulier dans l'Union Européenne où le taux de croissance annuel est d'environ 20 %. Cette croissance est attribuée à la possibilité inhérente de production d'électricité sans émissions de carbone. Afin de soutenir cette croissance, le rendement des éoliennes doit continuer à être amélioré. La perspective d'augmentation de production d'énergie éolienne nécessite le développement d'outils de production efficaces, et d'outils de contrôle avancé pour améliorer les performances des machines. Les éoliennes sont conçues pour produire de l'électricité à un prix aussi bas que possible. Par conséquent, les éoliennes sont en général construites de manière à atteindre leur performance maximale pour une vitesse du vent d'environ 15 m/s. Il n'est pas nécessaire de concevoir des éoliennes qui maximalisent leur rendement à des vitesses de vent plus élevées, celles-ci étant peu fréquentes. En cas de vitesses de vent supérieures à 15 m/s, il est nécessaire de perdre une partie de l'énergie supplémentaire contenue dans le vent afin d'éviter tout endommagement de l'éolienne. Toutes les éoliennes sont donc conçues avec un système de régulation de la puissance.

Pour cette régulation de la puissance, des contrôleurs sont conçus pour des aérogénérateurs à vitesse variable. Les objectifs des contrôleurs sont de maximiser la puissance électrique récupérée, de minimiser les fluctuations de vitesse du rotor et de minimiser la fatigue et les moments extrêmes de la structure (pales, mât et plate-forme).

Pour optimiser le contrôle, il est important de connaître la vitesse du vent au niveau du rotor de l'éolienne. Pour cela, différentes techniques ont été mises au point.

Selon une première technique, l'utilisation d'un anémomètre permet d'estimer une vitesse du vent en un point, mais cette technologie imprécise ne permet pas de mesurer l'ensemble d'un champ de vent ou de connaître les composantes tridimensionnelles de la vitesse du vent.

Selon une deuxième technique, on peut utiliser un capteur LIDAR (acronyme de l'expression en langue anglaise « light detection and ranging » pouvant être traduite par télédection par Laser). Le LIDAR est une technologie de télédétection ou de mesure optique basée sur l'analyse des propriétés d'un faisceau renvoyé vers son émetteur. Cette méthode est utilisée notamment pour déterminer la distance à un objet au moyen d'un laser à impulsions. À la différence du radar basé sur un principe similaire, le LIDAR utilise de la lumière visible ou infrarouge au lieu d'ondes radio. La distance à un objet ou à une surface est donnée par la mesure du délai entre l'impulsion et la détection du signal réfléchi.

Dans le domaine des éoliennes, le capteur LIDAR est annoncé comme étant un capteur indispensable au bon fonctionnement des grandes éoliennes, tout particulièrement alors que leur taille et leur puissance augmente. (aujourd'hui, 5 MW, bientôt 10 MW). Ce capteur permet la mesure à distance du vent, permettant dans un premier temps de calibrer les éoliennes pour qu'elle puissent fournir une puissance maximum (optimisation de la courbe de puissance). Pour cette étape de calibration, le capteur peut être positionné au sol et orienté verticalement (profiler), ce qui permet de mesurer la vitesse de vent et sa direction, ainsi que le gradient de vent selon les altitudes. Cette application est tout particulièrement critique puisqu'elle permet de connaitre la ressource productrice d'énergie. Ceci est important pour les projets éoliens, puisque cela conditionne la fiabilité financière du projet.

Une seconde application est le placement de ce capteur sur la nacelle de l'éolienne, pour mesurer le champ de vent en avant de l'éolienne en étant orienté quasiment horizontalement. A priori, la mesure du champ de vent à l'avant de l'éolienne permet de connaitre à l'avance la turbulence que va rencontrer l'éolienne quelques instants plus tard. Toutefois, les techniques actuelles de contrôle et de surveillance d'une éolienne ne permettent pas de prendre en compte une mesure réalisée par un capteur LIDAR en estimant précisément la vitesse du vent au niveau du rotor.

Les documents EP2581761 A1 et "A spectral model for evaluating the effect of wind evolution on wind turbine preview control" par Laks Jason et al, 2013 ACC, IEEE, 17 juin 2013, montrent des techniques d'estimation du vent basées sur un capteur LIDAR.

L'objet de l'invention concerne un procédé pour contrôler et/ou surveiller une éolienne, le contrôle et/ou la surveillance prenant en compte une estimation de la vitesse du vent au niveau du rotor obtenue au moyen d'un estimateur et d'un capteur LIDAR. L'estimateur du vent au niveau du rotor est construit à partir d'une représentation du vent, d'un modèle du capteur LIDAR et d'un modèle de propagation du vent. L'invention permet de connaître et d'estimer à l'avance les composantes tridimensionnelles du vent au niveau du rotor.

**Le procédé selon l'invention**

L'invention concerne un procédé de contrôle et/ou de surveillance d'une éolienne selon la revendication 1, équipée d'un capteur LIDAR réalisant une mesure relative au vent en un point situé en amont de ladite éolienne. Pour le procédé, on réalise les étapes suivantes :

a) on acquiert un signal correspondant à ladite mesure dudit capteur LIDAR ;
b) on construit un estimateur du vent au niveau du rotor de l'éolienne au moyen d'une représentation du vent, d'un modèle dudit capteur LIDAR, et d'un modèle de propagation du vent, ledit estimateur de vent au niveau du rotor reliant le signal du capteur à la vitesse du vent au niveau du rotor ;
c) on estime la vitesse du vent au niveau du rotor de ladite éolienne en appliquant ledit estimateur du vent au niveau du rotor audit signal acquis ; et
d) on contrôle et/ou on surveille ladite éolienne au moyen de ladite vitesse du vent estimée.

Selon un mode de réalisation de l'invention, on contrôle ladite éolienne au moyen du contrôle de l'angle d'inclinaison des pales de ladite éolienne et/ou du couple électrique de récupération d'un générateur de ladite éolienne.

Selon un mode de réalisation de l'invention, on effectue la surveillance du couple électrique de récupération d'un générateur de ladite éolienne en fonction de la vitesse de vent estimée.

La représentation du vent est un modèle fréquentiel, exprimé sous forme d'un spectre de Von Karman.

De préférence, la représentation du vent est connue préalablement ou déterminée en temps réel ou déterminée arbitrairement.

De manière avantageuse, ledit modèle dudit capteur LIDAR dépend d'au moins un angle de mesure $(\theta, \phi)$ dudit capteur LIDAR et d'une caractéristique volumique dudit capteur LIDAR.

Procédé selon la revendication 5, dans lequel ledit modèle dudit capteur LIDAR $M(v)$ s'écrit dans le domaine fréquentiel par une relation de la forme :

$$M(v) = e^{2i\pi v \frac{l_0 \sin(\phi)}{\overline{w}}} L(v) \begin{bmatrix} \sin(\phi) & \cos(\phi)\sin(\theta) & \cos(\phi)\cos(\theta) \end{bmatrix} \begin{bmatrix} W_x(v) \\ W_y(v) \\ W_z(v) \end{bmatrix}$$

avec $L(v)$ la transformée de Fourier de la fonction $\bar{f}(\tau - \frac{l_0 \sin(\phi)}{\overline{w}})$ et $\bar{f}(\tau - \frac{l_0 \sin(\phi)}{\overline{w}}) = \frac{K \sin^2(\phi)}{(\overline{\tau w})^2 \Gamma^2}$,

$\tau = \frac{l \sin(\phi)}{\overline{w}}$,

$l_0$ la distance focale dudit capteur LIDAR, $l$ la distance de mesure, $\theta$ et $\phi$ les angles d'orientation dudit capteur LIDAR, $\overline{w}$ la vitesse moyenne du vent, $\Gamma$ la constante de Rayleigh, K un facteur de régulation, et $W_x, W_y, W_z$ les composantes de la vitesse du vent audit point de mesure.

Selon un aspect de l'invention, ladite réponse fréquentielle dudit estimateur du vent au niveau du rotor $F(v)$

$$F(v) = e^{-2i\pi v \frac{l_0 \sin(\phi)}{\overline{w}}} W_l(v) M_R(v) \left( M_R(v) M_R^{T}(v) + \alpha^2 \right)^{-1}$$

s'écrit par une relation de la forme : avec

$$M_R(v) = L(v) \begin{bmatrix} \sin(\phi) & \cos(\phi)\sin(\theta) & \cos(\phi)\cos(\theta) \end{bmatrix} \begin{bmatrix} W_x(v) \\ W_y(v) \\ W_z(v) \end{bmatrix},$$

$W_l(v) = [W_x(v)\,0\,0]$, $L(v)$ la transformée de Fourier de la fonction $\overline{f}(\tau - \dfrac{l_0\sin(\phi)}{\overline{w}})$ et $\overline{f}(\tau - \dfrac{l_0\sin(\phi)}{\overline{w}}) = \dfrac{K\sin^2(\phi)}{(\overline{w})^2\,\Gamma^2}$,

$$\tau = \frac{l\sin(\phi)}{\overline{w}},$$

$l_0$ la distance focale dudit capteur LIDAR, $l$ la distance de mesure, $\theta$ et $\phi$ les angles d'orientation dudit capteur LIDAR, $\overline{w}$ la vitesse moyenne du vent, $\Gamma$ la constante de Rayleigh, K un facteur de régulation, $W_x, W_y, W_z$ les composantes de la vitesse du vent audit point de mesure, et $\alpha$ un paramètre de régularisation.

En outre, on peut construire ledit estimateur du vent au niveau du rotor au moyen d'une méthode de fenêtrage appliquée à ladite réponse fréquentielle dudit estimateur du vent au niveau du rotor.

Selon l'invention on construit ledit modèle de propagation du vent selon au moins une des hypothèses suivantes :

- le vecteur du vent est le même sur des plans verticaux perpendiculaires à la direction du vent,
- la turbulence du vent se propage à la vitesse moyenne du vent.

L'invention concerne en outre une éolienne, notamment éolienne offshore, équipée d'un capteur LIDAR dont le point de mesure est situé en amont de ladite éolienne. Ladite éolienne comprend des moyens de contrôles mettant en oeuvre le procédé de contrôle de l'éolienne selon l'une des revendications précédentes.

Avantageusement ledit capteur LIDAR est disposé sur la nacelle de ladite éolienne.

**Présentation succincte des figures**

D'autres caractéristiques et avantages du procédé selon l'invention, apparaîtront à la lecture de la description ci-après d'exemples non limitatifs de réalisations, en se référant aux figures annexées et décrites ci-après.

La figure 1 illustre une éolienne équipée d'un capteur LIDAR selon l'invention.
La figure 2 illustre les différentes étapes du procédé selon l'invention.
La figure 3 illustre un exemple de représentation de vent.
La figure 4 illustre les caractéristiques tridimensionnelles de la mesure du capteur LIDAR.
La figure 5 illustre une réponse impulsionnelle du LIDAR sous l'hypothèse de turbulence figée de Taylor, pour un LIDAR pointant dans la direction opposé au vecteur moyen du vent, pour trois distances focales de mesure.
Les figures 6a à 6g illustrent les différentes étapes de la méthode de fenêtrage pour un exemple.
Les figures 7a à 7d illustrent les étapes du procédé selon l'invention pour un exemple.

**Description détaillée de l'invention**

L'invention concerne un procédé de contrôle et/ou de surveillance d'une éolienne à axe horizontal sur terre ou en mer ("offshore"), dans lequel on contrôle et/ou on surveille l'éolienne en fonction d'une estimation de la vitesse du vent au niveau du rotor, l'éolienne étant équipée d'un capteur LIDAR pour réaliser cette estimation.

Notations

Au cours de la description, les notations suivantes sont utilisées :

- x, y, z : directions du repère tridimensionnel, avec z l'axe vertical et x la direction principale du vent.
- w : vecteur vitesse du vent, avec $w_x, w_y, w_z$ les composantes du vent sur le repère tridimensionnel, $\overline{w}$ la vitesse moyenne du vent et $W_x, W_y, W_z$ le spectre des composantes du vecteur vitesse.
- $L_v$ : longueur d'onde.
- $\sigma_x$ : facteur de mise à l'échelle.
- $l_0$ : distance focale dudit capteur LIDAR.

$$\vec{l} = \frac{\vec{OP_M}}{\left\| \vec{OP_M} \right\|}$$

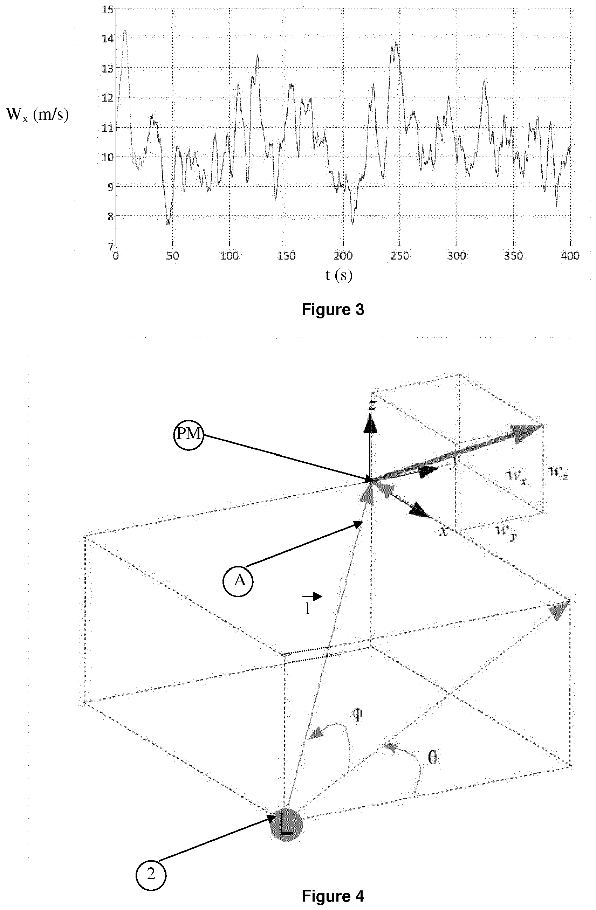

- $\vec{l}$ : vecteur de l'axe du capteur LIDAR, il s'agit du vecteur reliant le capteur LIDAR et le point de mesure avec O l'origine (emplacement du capteur LIDAR), et $P_M$ le point de mesure, et on note l la distance de mesure du LIDAR.
- $\theta$ et $\phi$ : angles d'orientation dudit capteur LIDAR. Ces angles sont explicités sur la figure 4 : l'angle $\theta$ est l'angle fait par la projection de l'axe (A) du LIDAR dans le plan (y, z), et $\phi$ est l'angle fait par la projection de l'axe (A) du LIDAR dans un plan constitué de l'axe x et de la projection de l'axe (A) du LIDAR dans le plan (y, z).
- $\Gamma$ : constante de Rayleigh, qu'on peut estimer valant 1570.
- K : facteur de régulation.
- $m(t)$ : mesure du capteur LIDAR.
- $\alpha$ : paramètre de réglage de l'estimateur qui peut être vu comme la confiance que l'on a dans la mesure, ou encore l'écart type du bruit de mesure. Ce paramètre est aussi appelé paramètre de régularisation.
- $\tau$ : retard représentatif du temps de propagation du vecteur vent entre le point de mesure et le plan du rotor.

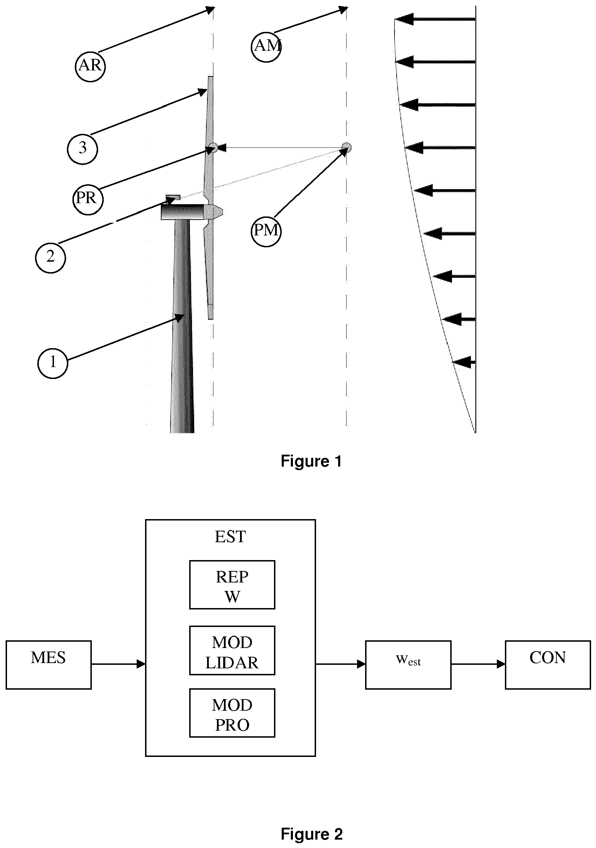

L'invention concerne un procédé d'estimation du vent sur le rotor d'une éolienne équipée d'un capteur LIDAR. Le capteur LIDAR réalise une mesure relative au vent en un point de mesure, situé devant l'éolienne. La figure 2 représente les différentes étapes du procédé selon l'invention :

1. Acquisition du signal de mesure (MES)
2. Construction de l'estimateur du vent au niveau du rotor (EST)
3. Estimation du vent au niveau du rotor ($w_{est}$)
4. Contrôle et/ou surveillance de l'éolienne (CON)

Le procédé selon l'invention permet de reconstituer le vent sur le plan du rotor à partir de la mesure du capteur LIDAR sur un plan de mesure. Cette représentation peut servir à réguler ou superviser l'éolienne.

1. Acquisition du signal de mesure (MES)

Le capteur LIDAR réalise une mesure relative à la vitesse du vent en un point de mesure situé en amont de l'éolienne (en face du rotor de l'éolienne). Cette mesure correspond au signal reçu par le capteur en provenance du point de mesure en réponse au signal émis par le capteur LIDAR. En effet, par interférométrie et effet Doppler, une partie de signal Laser émis par le capteur LIDAR est réfléchi par les molécules d'air au point de mesure et également par les aerosols, (poussières et microparticules en suspension). Le point de mesure est défini par les caractéristiques du capteur LIDAR, notamment la distance focale, ainsi que par son orientation. Cette mesure, dépendante de la vitesse du vent, est un temps et dépend de l'orientation du capteur LIDAR. Cette mesure est acquise afin d'être exploitée dans le but de déterminer la vitesse du vent au niveau du rotor.

La figure 1 représente une éolienne 1 équipée d'un capteur LIDAR 2 adaptée au procédé selon l'invention. Un capteur LIDAR 2 est utilisé pour mesurer la vitesse du vent à une distance donnée sur un point de mesure PM. Monté, par exemple sur la nacelle de l'éolienne 1 qui est supposée alignée avec la direction du vent, ce capteur 2 mesure le vent imminent, c'est à dire le vent qui va à priori être rencontré par l'éolienne. La connaissance en avance de la mesure de vent permet à priori de donner beaucoup d'informations.

La figure 1 permet notamment de décrire le processus de mesure : le capteur LIDAR 2 mesure le vent sur le plan de mesure AM, placé en avant de l'éolienne 1, une certaine caractéristique de mesure. La projection du point de mesure PM sur le plan du rotor AR est noté PR. La partie droite de la figure illustre un exemple de représentation du vent dans la direction horizontale en fonction de la hauteur.

Il existe plusieurs types de capteur LIDAR, par exemple les capteurs LIDAR scanné ou LIDAR pulsé.

2. <u>Construction de l'estimateur du vent au niveau du rotor (EST)</u>

Lors de cette étape, on construit un estimateur du vent au niveau du rotor. L'estimateur du vent permet d'estimer la vitesse du vent (ses trois composantes) au niveau du rotor au moyen du signal du capteur LIDAR. Selon l'invention, l'estimateur du vent au niveau du rotor est construit au moyen d'une représentation du vent, d'un modèle du capteur LIDAR et d'un modèle de propagation du vent. Cet estimateur est un objet filtre à réponse impulsionnelle finie, qui admet en entrée la mesure brute du LiDAR au point PM et renvoie en sortie l'estimation du vent sur le point PR du plan rotor.

2.1 Représentation du vent (REP W)

Le vent instantané est défini à un endroit donné comme un vecteur composé de trois composantes $w_x(t)$, $w_y(t)$, $w_z(t)$. Par conséquent, le vecteur de vent à un instant donné (t) et à un point donné (x,y,z) est représenté par une relation du type :

$$\vec{w}(x,y,z,t) = w_x(x,y,z,t)\vec{x} + w_y(x,y,z,t)\vec{y} + w_z(x,y,z,t)\vec{z}$$

Selon l'invention, le type représentation du vent utilisé peut être connue préalablement, déterminée en temps réel ou déterminé arbitrairement.

Selon un mode de réalisation de l'invention, les trois composantes de la vitesse $w_x(t)$, $w_y(t)$, $w_z(t)$ peuvent être définies par leurs spectres respectifs $W_x$, $W_y$, $W_z$. Ce spectre est supposé connu ou identifié. Il peut être disponible sous une forme analytique, ou bien sous la forme d'une table ou d'un vecteur de donné. Par exemple, le spectre de Von Karman peut être utilisé pour la composante x, bien que la méthode proposée permettent de s'adapter à n'importe quel spectre. Selon cet exemple, on peut noter :

$$W_x(\nu) = \frac{0.475\sigma_x^2 \dfrac{L_\nu}{\overline{w}}}{\left(1 + \left(2\pi\nu \dfrac{L_\nu}{\overline{w}}\right)^2\right)^{5/6}}$$

$L_\nu$ est un paramètre appelé longueur d'onde, $\sigma_x$ un facteur de mise à l'échelle caractérisant la taille de la turbulence et $\overline{w}$ est la vitesse moyenne du vent. Ce spectre et ses paramètres peuvent varier selon les endroits, les journées. Le procédé selon l'invention permet de prendre en compte n'importe quel spectre. La figure 3 est un exemple de représentation de la vitesse du vent $w_x$ selon l'axe x en fonction du temps t, obtenu par le spectre de Von Karman.

2.2 Modèle de propagation du vent (MOD PRO)

Afin de prendre en compte en compte la distance entre le point de mesure (PM) à laquelle une mesure relative au vent est réalisée et le plan du rotor (AR) pour lequel on souhaite connaître la vitesse du vent, on modélise la propagation du vent sur cette distance.

Selon un mode de réalisation de l'invention, le modèle de propagation du vent est construit à partir d'au moins une des hypothèses suivantes :

• Cohérence du vent unitaire

L'hypothèse de cohérence unitaire signifie que le vecteur de vent est le même sur des plans verticaux perpendiculaires à la direction du vent.

$$w_x(x,y,z,t) = w_x(x,0,0,t), w_y(x,y,z,t) = w_y(x,0,0,t), w_z(x,y,z,t) = w_z(x,0,0,t)$$

• Hypothèse de turbulence figée de Taylor

L'hypothèse de turbulence figée signifie que la turbulence se propage à la vitesse moyenne du vent.

$$\vec{w}(x + dx, y, z, t) = \vec{w}(x, y, z, t - \frac{dx}{\overline{w}})$$

Ces deux hypothèses constituent de bonnes approximations pour les échelles locales qui sont considérées pour le procédé selon l'invention.

2.3 Modèle du capteur LIDAR (MOD LIDAR)

La mesure du capteur LIDAR est caractérisée par deux fonctions. La figure 4 représente les caractéristiques tridimensionnelles de la mesure du capteur LIDAR. La première fonction correspond à l'axe de mesure et peut être notée :

$$\vec{l} = \begin{bmatrix} \sin(\phi) & \cos(\phi)\cos(\theta) & \cos(\phi)\sin(\theta) \end{bmatrix} \begin{bmatrix} \vec{x} \\ \vec{y} \\ \vec{z} \end{bmatrix}$$

La deuxième caractéristique correspond à une caractéristique spatiale (ou volumique) du LIDAR. La mesure m(t) peut être exprimée par une relation de la forme :

$$m(t) = \int_0^{+\infty} \left( \vec{l}(\phi, \theta).\vec{w}(l\sin(\phi), l\cos(\phi)\cos(\theta), l\cos(\phi)\sin(\theta), t) \right) f(l, l_0)dl$$

$f(l,l_0)$ est la caractéristique spatiale, $l_0$ est la distance focale et peut dépendre de la configuration du capteur LIDAR. Le modèle exprimé ci-dessus est adaptable au type de capteur LIDAR (scanné ou pulsé) utilisé au moyen de la fonction f.
Par exemple, dans le cas du LIDAR scanné, cette caractéristique spatiale peut s'écrire par une relation de la forme :

$$f(l, l_0) = \cfrac{K}{l^2 + \left(1 - \cfrac{l}{l_0}\right)^2 \Gamma} \, ,$$

où $\Gamma$ est la constante de Rayleigh (1570), et K est un facteur de régulation.
Sous les hypothèses proposées, l'équation de mesure du capteur LIDAR peut se mettre sous la forme d'un produit de convolution, qui admet une réponse fréquentielle.
Par application de l'hypothèse de Taylor, on peut écrire :

$$m(t) = \int_0^{+\infty} \left( \vec{l}(\phi, \theta).\vec{w}(0, l\cos(\phi)\cos(\theta), l\cos(\phi)\sin(\theta), t + \frac{l\sin(\phi)}{\overline{w}}) \right) f(l, l_0)dl$$

Par choix d'une cohérence unitaire, on peut écrire :

$$m(t) = \int_0^{+\infty} \left( \vec{l}(\phi, \theta).\vec{w}(t + \frac{l\sin(\phi)}{\overline{w}}) \right) f(l, l_0)dl$$

Puis, par développement du produit scalaire :

$$m(t) = \begin{cases} \sin(\phi) \int\limits_{0}^{+\infty} \vec{w}_x \left( t + \dfrac{l\sin(\phi)}{\overline{w}} \right) f(l,l_0)dl \\[2em] \cos(\phi)\cos(\theta) \int\limits_{0}^{+\infty} \vec{w}_y \left( t + \dfrac{l\sin(\phi)}{\overline{w}} \right) f(l,l_0)dl \\[2em] \cos(\phi)\sin(\theta) \int\limits_{0}^{+\infty} \vec{w}_y \left( t + \dfrac{l\sin(\phi)}{\overline{w}} \right) f(l,l_0)dl \end{cases}$$

On pose les changement de variables suivants:

$$\tau = \frac{l\sin(\phi)}{\overline{w}}, \quad l = \frac{\tau\overline{w}}{\sin(\phi)}, \quad \bar{f}(\tau) = \frac{K}{\left( \dfrac{\tau\overline{w}}{\sin(\phi)} \right)^2 + \left( 1 + \dfrac{\tau\overline{w}}{l_0\sin(\phi)} \right)^2 \Gamma},$$

On est alors face à une équation du type:

$$m(t) = \begin{cases} \sin(\phi) \int\limits_{-\infty}^{+\infty} \vec{w}_x (t + \tau) \bar{f}(\tau)dl \\[2em] \cos(\phi)\cos(\theta) \int\limits_{-\infty}^{+\infty} \vec{w}_y (t + \tau) \bar{f}(\tau)dl \\[2em] \cos(\phi)\sin(\theta) \int\limits_{-\infty}^{+\infty} \vec{w}_y (t + \tau) \bar{f}(\tau)dl \end{cases}$$

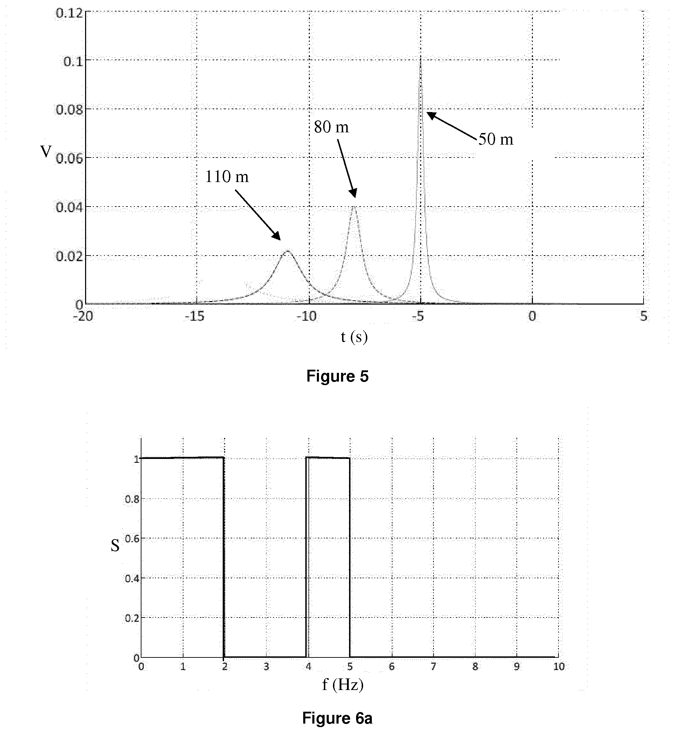

Ceci est l'équation d'un produit de convolution, d'un système dont la réponse impulsionnelle est définie par $\bar{f}(\tau)$. La figure 5 illustre un exemple de réponse V à une impulsion en fonction du temps pour un capteur LIDAR avec différentes distances focales $l_0$. Les abscisses sont données par t=l/vitessemoyenne

Le capteur LIDAR peut donc être vu, sous ces hypothèses comme un système de convolution dont la réponse impulsionnelle est la suivante:

$$\bar{f}(\tau) = \frac{K\sin^2(\phi)}{(\tau\overline{w})^2 + (l_0\sin(\phi) + \tau\overline{w})^2 \Gamma},$$

$$\bar{f}(\tau - \frac{l_0\sin(\phi)}{\overline{w}}) = \frac{K\sin^2(\phi)}{(\tau - l_0\sin(\phi))^2 + (\tau\overline{w})^2 \Gamma^2}$$

ou encore

$$\bar{f}(\tau - \frac{l_0\sin(\phi)}{\overline{w}}) = \frac{K\sin^2(\phi)}{(\tau\overline{w})^2 \Gamma^2}$$

Ce qui peut être approximé par          au vu de l'ordre de la constante Γ. La réponse fréquentielle du système peut donc s'écrire sous la forme suivante : $e^{2i\pi v \frac{l_0\sin(\phi)}{\overline{w}}} L(v)$ où $L(v)$ est la transformée de Fourier de la fonction $\bar{f}(\tau - \frac{l_0\sin(\phi)}{\overline{w}})$.

Ces étapes sont systématiques, et ne dépendent que de la vitesse moyenne du vent et de la caractéristique volumique. Dans la pratique, on obtient très facilement un vecteur de valeur correspondant à la fonction $L(v)$.

Si la fonction $\bar{f}(\tau - \dfrac{l_0 \sin(\phi)}{\bar{w}})$ n'est pas symétrique autour de $l_0$, comme dans le cas du capteur LIDAR scanné, cela reste une bonne approximation. Dans le cas du capteur LIDAR pulsé, la fonction est symétrique. Etant donné que la fonction est symétrique, la réponse fréquentielle $L(v)$ est réelle.

Par conséquent, le modèle (la mesure) du capteur LIDAR, sous les hypothèses citées peut s'écrire dans le domaine fréquentiel sous la forme suivante :

$$M(v) = e^{2i\pi v \frac{l_0 \sin(\phi)}{\bar{w}}} L(v) \begin{bmatrix} \sin(\phi) & \cos(\phi)\sin(\theta) & \cos(\phi)\cos(\theta) \end{bmatrix} \begin{bmatrix} W_x(v) \\ W_y(v) \\ W_z(v) \end{bmatrix}$$

2.4 Construction de l'estimateur de vent

Les modèles du capteur LIDAR, de propagation du vent et la représentation du vent servent d'entrée pour la construction de l'estimateur du vent au niveau du rotor.

La méthode de reconstruction s'effectue en deux temps. Dans un premier temps, on calcule la réponse fréquentielle optimale de l'estimateur. Dans un second temps, on calcule la réponse impulsionnelle d'un système de convolution ayant cette réponse fréquentielle.

Selon l'invention, on cherche à estimer au moins une composante de la vitesse du vent au niveau du rotor, notamment la composante longitudinale sur le plan rotor. Alternativement, l'estimateur permet d'estimer les trois composantes de la vitesse du vent. Pour cela, on cherche à minimiser une erreur d'estimation e(t), qui est définie par la différence entre l'estimation de la vitesse sur le plan du rotor et la vitesse réelle sur ce plan. Ainsi, le spectre de l'erreur d'estimation $E(v)$ peut s'écrire :

$$E(v) = \begin{bmatrix} 1 & -F(v)e^{2i\pi v \frac{l_0 \sin(\phi)}{\bar{w}}} L(v) \end{bmatrix} \begin{bmatrix} 1 & 0 & 0 \\ \sin(\phi) & \cos(\phi)\sin(\theta) & \cos(\phi)\cos(\theta) \end{bmatrix} \begin{bmatrix} W_x(v) \\ W_y(v) \\ W_z(v) \end{bmatrix}$$

On pose également les notations suivantes :

$$W_l(v) = \begin{bmatrix} W_x(v) & 0 & 0 \end{bmatrix}$$

$$M(v) = e^{2i\pi v \frac{l_0 \sin(\phi)}{\bar{w}}} L(v) \begin{bmatrix} \sin(\phi) & \cos(\phi)\sin(\theta) & \cos(\phi)\cos(\theta) \end{bmatrix} \begin{bmatrix} W_x(v) \\ W_y(v) \\ W_z(v) \end{bmatrix} = e^{2i\pi v \frac{l_0 \sin(\phi)}{\bar{w}}} M_R(v)$$

La solution minimisant la densité spectrale de puissance de l'erreur d'estimation s'écrit sous la forme suivante :

$$F(v) = W_l(v)M^*(v)\left(M(v)M^*(v) + \alpha^2\right)^{-1}$$

On peut remarquer sur cette forme que les termes $W_l(v)$ et

$$\left(M(v)M^*(v) + \alpha^2\right)^{-1} = \left(M_R(v)M_R^T(v) + \alpha^2\right)^{-1}$$

sont des termes réels. Ainsi la réponse fréquentielle l'estimateur du vent $F(v)$ au niveau du rotor peut s'écrire sous la forme :

$$F(v) = e^{-2i\pi v \cdot \frac{l_0 \sin(\phi)}{\overline{w}}} W_I(v) M_R(v) \Big( M_R(v) M_R{}^T(v) + \alpha^2 \Big)^{-1}$$

Pour construire l'estimateur du vent au niveau du rotor au moyen de cette réponse fréquentielle, on peut utiliser plusieurs méthodes, notamment une méthode de fenêtrage, en particulier en utilisant une fenêtre de Hanning. Pour cette méthode, on développe une technique permettant de créer un filtre causal présentant une caractéristique fréquentielle de la forme suivante :

$$F(v) = e^{-2i\pi v\tau} S(v)$$

La création de l'estimateur se déroule en deux étapes :

- dans un premier temps, on calcule la réponse impulsionnelle du filtre non causale du filtre continu ayant la réponse fréquentielle $S(v)$.
- la réponse impulsionnelle est alors décalée dans le temps pour obtenir la réponse impulsionnelle du filtre présentant la caractéristique recherchée. On sélectionne alors des échantillons à une fréquence d'échantillonnage donnée, sur une fenêtre donnée. L'approximation obtenue est alors de qualité.

Les figures 6a à 6g illustrent les différentes étapes de la méthode de fenêtrage pour un exemple. Pour cet exemple, on définit un filtre pour lequel on souhaite la réponse fréquentielle suivante : 1 entre 0 et 2 Hz et 4-5Hz, 0 ailleurs, le retard souhaité est de 5s. La figure 6a illustre cette réponse souhaitée.

La première étape consiste donc à calculer la réponse impulsionnelle présentant la réponse fréquentielle présentée en figue 6b.

Pour ceci, on définit d'abord un vecteur de fréquences de la forme :
[0, 1*Fs/N, 2*Fs/N, .... (n-1)*Fs/N], avec Fs la fréquence d'échantillonnage, et N le nombre d'échantillons.

Pour ces fréquences, on définit la réponse fréquentielle du filtre :

$$[\, S(0)\,, S(Fs/N)\,, S(2Fs/N)\,, \dots\dots, S((N-1)Fs/N)\,]$$

La réponse recherchée est la réponse d'un filtre discret, symétrique autour de l'axe.

On définit donc le vecteur suivant :

$$[\, S(0) + S((N-1)Fs/N)\,, S(Fs/N) + S((N-2)Fs/N)\,, \dots\dots,$$
$$S((N-1)Fs/N) + S(Fs/N)\,]$$

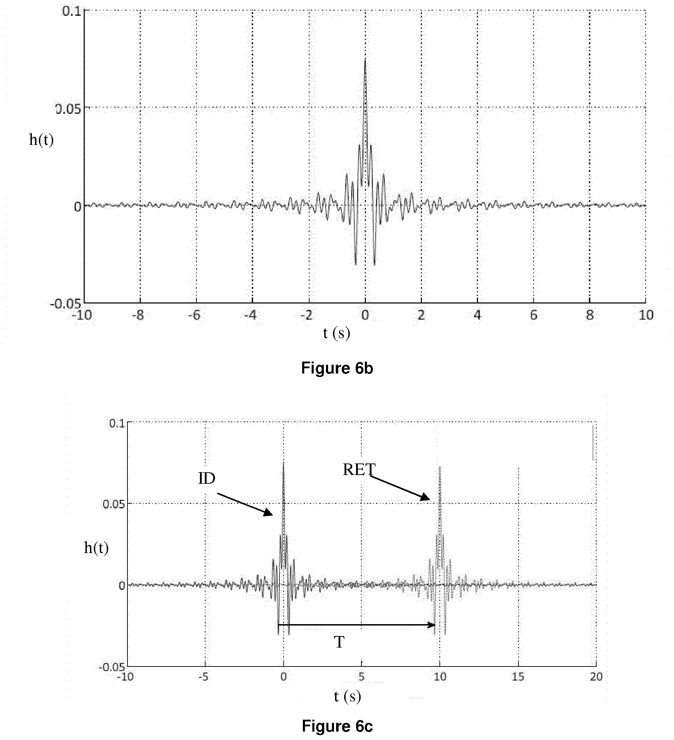

Par application de la transformation inverse discrète de Fourier, on obtient après réarrangement la réponse impulsionnelle ID illustrée en figure 6b.

Cette réponse impulsionnelle contient N échantillons, et est échantillonnée à une fréquence d'échantillonnage de Fs. L'estimateur ayant cette réponse impulsionnelle est un filtre discret, non causal, ayant le réponse fréquentielle $S(v)$. La réponse fréquentielle recherché est du type $F(v) = e^{-2i\pi v\tau}S(v)$. La partie $e^{-2i\pi v\tau}$ est un retard de temps $\tau$. La réponse impulsionnelle du filtre ayant la réponse fréquentielle recherchée peut donc être obtenue après un simple décalage. La figure 6c représente la réponse impulsionnelle RET recherchée obtenue par décalage de ID. Cette figure illustre la réponse impulsionnelle idéale ID ainsi que la réponse impulsionnelle obtenue après retard RET par une translation T.

L'étape suivante consiste à approximer cette réponse impulsionnelle au moyen d'un fenêtrage. Plusieurs types de fenêtre peuvent être utilisés : en général, la fenêtre de Hanning donne une excellente approximation.

La fenêtre de Hanning est définie par :

$$H(t) = \begin{cases} \dfrac{1}{2} + \dfrac{1}{2}\cos\left(\dfrac{2\pi(t - \frac{Ta}{2})}{Ta}\right), t \in [-Ta, Ta] \\ \\ 0 \quad ailleurs \end{cases},$$

On multiplie la réponse impulsionnelle par H(t-, $\tau$), ou $\tau$ correspond au retard souhaité. le paramètre Ta permet de choisir la qualité de l'approximation, et est compris entre 0 et $\tau$.

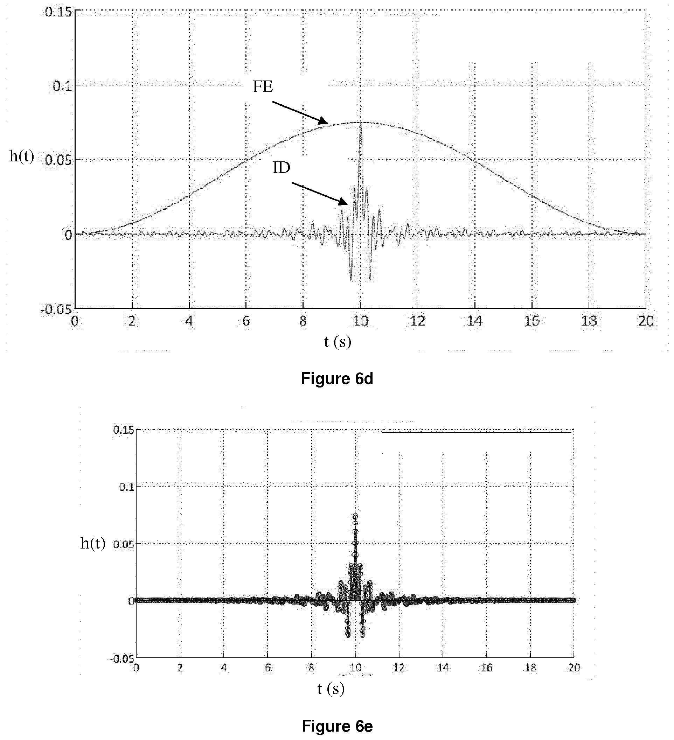

La figure 6d montre comment le fenêtrage permet de choisir un intervalle. Cette figure indique le fenêtrage FE et la réponse impulsionnelle idéale ID, en fonction du temps.

L'application de ces étapes permet d'obtenir un vecteur. Les valeurs de ce vecteur doivent être régularisés de telle sorte que leur somme soit égale à S(0), la réponse de l'estimateur du vent à la fréquence nulle. Après régularisation, les valeurs de ce vecteur donnent les coefficients d'un filtre FIR discret à la fréquence d'échantillonnage Fs. La figure 6e illustre la réponse fréquentielle du filtre FIR en fonction du temps.

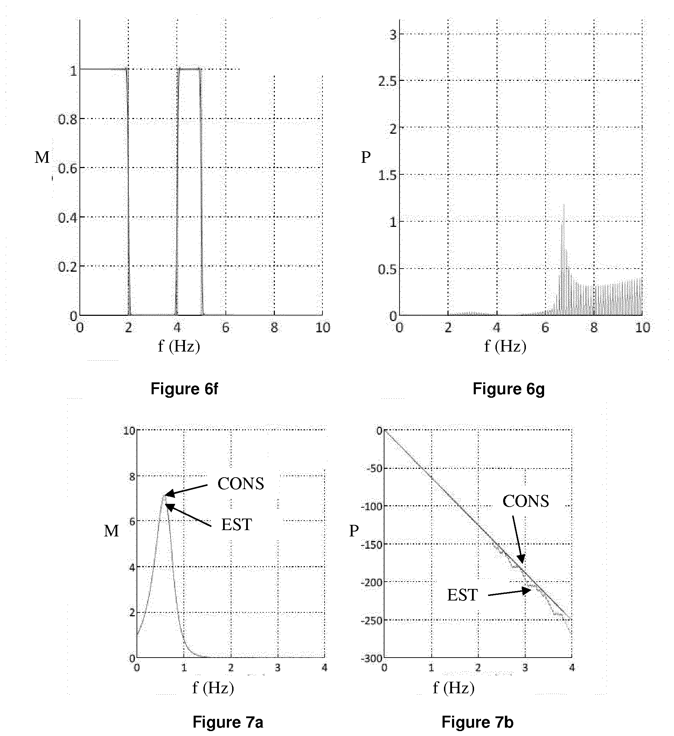

Si on regarde la réponse fréquentielle de ce filtre en regardant sa réponse fréquentielle M et sa phase P en fonction de la fréquence f, telles que présentées respectivement au figures 6f et 6g, il est visible que la phase correspond parfaitement au retard souhaité (la courbe obtenue est sensiblement superposée à la courbe souhaitée), et que l'amplitude est une bonne approximation des spécifications.

La construction de l'estimateur est donc une méthode très générique permettant de mettre un oeuvre un estimateur (filtre) dont on connait la réponse fréquentielle, qui présente une forme analogue à la forme solution du problème de filtrage optimal. La contribution est la combinaison de la modélisation, de la mise en forme du problème d'estimation et de sa solution et de l'utilisation de la méthode du fenêtrage pour mettre en place le filtre.

Le caractère générique est apporté par le fait que la méthode fonctionne quelle que soit la caractéristique du capteur LIDAR, quel que soit la représentation du vent. On peut toujours trouver une solution et la mettre en oeuvre au moyen de la méthode du fenêtrage. Ainsi, l'estimateur du vent au niveau du rotor est valable pour toutes les représentations du vent, et tous les modèles du capteur de LIDAR.

Un autre point important est que l'ensemble des calculs sont efficaces au sens de la complexité algorithmique, c'est à dire qu'ils sont rapides (le temps de calcul n'est pas important). Cette méthode permet de créer un objet filtre, qui peut facilement se mettre en oeuvre. C'est cet objet qui va assurer la reconstruction du vent au niveau du rotor.

3. Estimation du vent au niveau du rotor ($w_{est}$)

Lors de cette étape, on estime la vitesse du vent au niveau du rotor au moyen de la mesure acquise et de l'estimateur de vent au niveau du rotor. Pour cela, on applique l'estimateur construit au signal acquis au point de mesure.

De préférence, l'estimation concerne les trois composantes de la vitesse du vent au niveau du rotor. Alternativement, l'estimation de la vitesse du vent concerne au moins une composante de la vitesse du vent, en particulier la composante longitudinale de la vitesse du vent.

Le temps de calcul étant faible au regard de l'application, il est donc possible de déterminer la vitesse du vent au niveau du rotor en avance.

4. Contrôle et/ou de surveillance de l'éolienne (CON)

En fonction de la vitesse estimée du vent w au niveau du rotor, on peut contrôler l'éolienne de manière à optimiser l'énergie récupérée. Selon l'invention, on peut commander l'angle d'inclinaison des pales et/ou le couple électrique de récupération du générateur de l'éolienne en fonction de la vitesse du vent. D'autres types de dispositif de régulation peuvent être utilisés.

Selon un mode de réalisation de l'invention, l'angle d'inclinaison des pales et/ou le couple électrique de récupération sont déterminés au moyen de cartographies de l'éolienne en fonction de la vitesse du vent au niveau du rotor. Par exemple, on peut appliquer le procédé de contrôle décrit dans la demande de brevet FR 2976630 A1 (US 2012-0321463).

Le contrôle de l'éolienne permet d'optimiser l'énergie récupérée. De plus, au moyen de ce contrôle, le LIDAR permet de réduire les charges sur la structure, dont les pâles et le mât représentent 54% du coût. Par conséquent, l'utilisation d'un capteur LIDAR permet d'optimiser la structure de l'éolienne, et donc de diminuer les coûts et la maintenance.

En outre, l'estimation du vent au niveau du rotor peut être utilisé pour la surveillance de l'éolienne. Par exemple, on peut l'utiliser pour la supervision en temps réel de l'éolienne ou pour diagnostiquer une défaillance de celle-ci. Selon un mode de réalisation de l'invention, on effectue la surveillance du couple électrique de récupération d'un générateur de ladite éolienne en fonction de la vitesse de vent estimée

Alternativement, l'estimation de la vitesse du vent au niveau du rotor peut être utilisé conjointement pour le contrôle et la surveillance de l'éolienne.

L'invention concerne également une éolienne, notamment une éolienne offshore équipée d'un capteur LIDAR. Selon un mode de réalisation de l'invention, le capteur LIDAR peut être disposé sur la nacelle de l'éolienne. Le capteur LIDAR est dirigé de telle sorte à réaliser une mesure du vent en amont de l'éolienne. L'éolienne comprend des moyens de contrôle, par exemple le contrôle de l'angle de pitch, pour mettre en oeuvre le procédé selon l'invention.

Exemple d'application

Dans cette section, on détaille pour un exemple les étapes de création de l'estimateur permettant la reconstruction du vent sur le plan rotor.

• Spectre du vent

Ce spectre est supposé connu ou identifié. Il peut être disponible sous une forme analytique, ou bien sous la forme d'une table ou d'un vecteur de donné. Pour cet exemple, le spectre du vent est exprimé selon le spectre de Von Karman.

• Caractéristique fréquentielle du capteur LIDAR.

La caractéristique du capteur LIDAR est donnée sous la forme d'une fonction de la distance focale $l_0$ La fonction est une intégrale sur l'axe : c'est une intégrale pondéré du produit scalaire du vecteur de vent à un point de l'axe sur l'axe vers lequel point le LiDAR. Dans le cas d'un capteur LIDAR Scanné, la fonction de pondération est

$$f(l, l_0) = \frac{K}{l^2 + \left(1 - \frac{l}{l_0}\right)^2 \Gamma} \; .$$

On peut obtenir la caractéristique fréquentielle du capteur LIDAR en deux étapes : la première passe par le changement de variable $\tau = \dfrac{l \sin(\phi)}{\overline{w}}$ , puis par le recentrage de la caractéristique autour de $\dfrac{l_0 \sin(\phi)}{\overline{w}}$ . La réponse fréquentielle peut alors être caractérisée par une solution analytique, ou numérique au moyen de la transformée de Fourier discrète. On dispose alors de la réponse fréquentielle du capteur LIDAR: $e^{2i\pi v \frac{l_0 \sin(\phi)}{\overline{w}}} L(v) \, .$

• Construction de l'estimateur de vent

On est alors en mesure de calculer la réponse optimale de l'estimateur du vent donnée par :

$$F(v) = e^{-2i\pi v \frac{l_0 \sin(\phi)}{\overline{w}}} W_l(v) M_R(v) \left( M_R(v) M_R^{\,T}(v) + \alpha^2 \right)^{-1}$$

$$W_l(v) = \begin{bmatrix} W_x(v) & 0 & 0 \end{bmatrix}$$

$$M_R(v) = L(v) \begin{bmatrix} \sin(\phi) & \cos(\phi)\sin(\theta) & \cos(\phi)\cos(\theta) \end{bmatrix} \begin{bmatrix} W_x(v) \\ W_y(v) \\ W_z(v) \end{bmatrix}$$

Pour cela, on met alors en oeuvre la méthode du fenêtrage pour créer le filtre présentant la réponse fréquentielle

$$F(v) = e^{-2i\pi v \frac{l_0 \sin(\phi)}{\overline{w}}} W_l(v) M_R(v) \left( M_R(v) M_R^T(v) + \alpha^2 \right)^{-1}.$$

Ainsi on obtient la réponse fréquentielle telle qu'illustrée aux figures 7a et 7b. Sur la figure 7a, on remarque que pour l'amplitude M la courbe de la consigne CONS est quasiment superposée à la courbe estimée EST. Sur la figure 7b concernant la phase P, on remarque que les courbes de la consigne CONS et de l'estimation EST sont assez proches.

• Estimation de la vitesse du vent

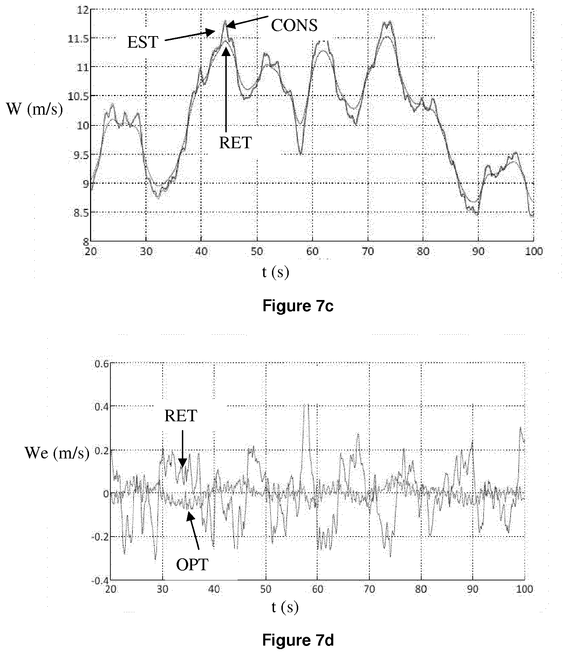

Le signal mesuré par le capteur LIDAR est alors passé dans l'estimateur construit pour récupérer l'estimation du vent sur le plan du rotor. La figure 7c représente les courbes relatives à la vitesse du vent pour les signaux de la consigne CONS (correspondant à la vitesse du vent réel au niveau du rotor), de l'estimateur EST (correspondant à la vitesse du vent calculé par l'estimateur) et le retard RET (correspondant à la réponse impulsionnelle du filtre recherché, qui correspond à la réponse impulsionnelle du filtre idéal que l'on a retardé. Ce retard correspond au delai d'arrivée du vent sur le plan du rotor). La figure 7d permet une comparaison de l'erreur de vitesse pour l'estimateur optimal (OPT) et le retard RET.

On peut observer que l'estimateur selon l'invention permet d'estimer précisément la vitesse du vent au niveau du rotor. Ainsi, le contrôle de l'éolienne peut être adapté de manière efficace en fonction du vent.

**Revendications**

1. Procédé de contrôle et/ou de surveillance d'une éolienne équipée d'un capteur LIDAR réalisant une mesure relative au vent en un point situé en amont de ladite éolienne, tel qu'on réalise les étapes suivantes :

   a) on acquiert un signal correspondant à ladite mesure dudit capteur LIDAR ;
   b) on construit un estimateur du vent au niveau du rotor de l'éolienne au moyen d'une représentation du vent qui est un modèle fréquentiel, exprimé sous forme d'un spectre de Von Karman, d'un modèle dudit capteur LIDAR qui dépend d'au moins un angle de mesure ($\theta, \phi$) dudit capteur LIDAR et d'une caractéristique volumique dudit capteur LIDAR, et d'un modèle de propagation du vent, ledit estimateur de vent au niveau du rotor étant un objet filtre à réponse impulsionnelle finie reliant le signal du capteur à la vitesse du vent au niveau du rotor, la construction dudit estimateur de vent s'effectuant en deux temps : dans un premier temps on calcule la réponse fréquentielle optimale de l'estimateur, et dans un second temps on calcule la réponse impulsionnelle d'un système de convolution ayant cette réponse fréquentielle ;
   c) on estime la vitesse du vent au niveau du rotor de ladite éolienne en appliquant ledit estimateur du vent au niveau du rotor audit signal acquis ; et
   d) on contrôle et/ou on surveille ladite éolienne au moyen de ladite vitesse du vent estimée.

2. Procédé selon la revendication 1, dans lequel on contrôle ladite éolienne au moyen du contrôle de l'angle d'inclinaison des pales de ladite éolienne et/ou du couple électrique de récupération d'un générateur de ladite éolienne.

3. Procédé selon la revendication 1, dans lequel on effectue la surveillance du couple électrique de récupération d'un générateur de ladite éolienne en fonction de la vitesse de vent estimée.

4. Procédé selon la revendication 3, dans lequel ladite représentation du vent est connue préalablement ou déterminée en temps réel ou déterminée arbitrairement.

5. Procédé selon la revendication 1, dans lequel ledit modèle dudit capteur LIDAR $M(v)$ s'écrit dans le domaine fréquentiel par une relation de la forme :

$$M(v) = e^{2i\pi v \frac{l_0 \sin(\phi)}{\overline{w}}} L(v) \begin{bmatrix} \sin(\phi) & \cos(\phi)\sin(\theta) & \cos(\phi)\cos(\theta) \end{bmatrix} \begin{bmatrix} W_x(v) \\ W_y(v) \\ W_z(v) \end{bmatrix}$$

avec $L(v)$ la transformée de Fourier de la fonction $\bar{f}(\tau - \frac{l_0 \sin(\phi)}{\overline{w}})$ et $\bar{f}(\tau - \frac{l_0 \sin(\phi)}{\overline{w}}) = \frac{K \sin^2(\phi)}{(\overline{\tau w})^2 \Gamma^2}$,

$$\tau = \frac{l \sin(\phi)}{\overline{w}},$$

$l_0$ la distance focale dudit capteur LIDAR, l la distance de mesure, $\theta$ et $\phi$ les angles d'orientation dudit capteur LIDAR, $\overline{w}$ la vitesse moyenne du vent, $\Gamma$ la constante de Rayleigh, K un facteur de régulation, et $W_x$, $W_y$, $W_z$ les composantes de la vitesse du vent audit point de mesure.

6. Procédé selon l'une des revendications précédentes, dans lequel ladite réponse fréquentielle dudit estimateur du vent au niveau du rotor $F(v)$ s'écrit par une relation de la forme :

$$F(v) = e^{-2i\pi v \frac{l_0 \sin(\phi)}{\overline{w}}} W_l(v) M_R(v) \left( M_R(v) M_R^T(v) + \alpha^2 \right)^{-1} \text{ avec}$$

$$M_R(v) = L(v) \begin{bmatrix} \sin(\phi) & \cos(\phi)\sin(\theta) & \cos(\phi)\cos(\theta) \end{bmatrix} \begin{bmatrix} W_x(v) \\ W_y(v) \\ W_z(v) \end{bmatrix},$$

$W_l(v) = [W_x(v)\ 0\ 0]$, $L(v)$ la transformée de Fourier de la fonction $\bar{f}(\tau - \frac{l_0 \sin(\phi)}{\overline{w}})$ et $\bar{f}(\tau - \frac{l_0 \sin(\phi)}{\overline{w}}) = \frac{K \sin^2(\phi)}{(\overline{\tau w})^2 \Gamma^2}$, $\tau = \frac{l \sin(\phi)}{\overline{w}}$, $l_0$ la distance focale dudit capteur LIDAR, l la distance de mesure, $\theta$ et $\phi$ les angles d'orientation dudit capteur LIDAR, $\overline{w}$ la vitesse moyenne du vent, $\Gamma$ la constante de Rayleigh, K un facteur de régulation, $W_x$, $W_y$, $W_z$ les composantes de la vitesse du vent audit point de mesure, et $\alpha$ un paramètre de régularisation.

7. Procédé selon la revendication 6, dans lequel on construit ledit estimateur du vent au niveau du rotor au moyen d'une méthode de fenêtrage appliquée à ladite réponse fréquentielle dudit estimateur du vent au niveau du rotor.

8. Procédé selon l'une des revendications précédentes, dans lequel on construit ledit modèle de propagation du vent selon au moins une des hypothèses suivantes :

- le vecteur du vent est le même sur des plans verticaux perpendiculaires à la direction du vent,
- la turbulence du vent se propage à la vitesse moyenne du vent.

9. Éolienne, notamment éolienne offshore, équipée d'un capteur LIDAR dont le point de mesure est situé en amont de ladite éolienne, **caractérisée en ce que** ladite éolienne comprend des moyens de contrôles mettant en oeuvre le procédé de contrôle de l'éolienne selon l'une des revendications précédentes.

10. Éolienne selon la revendication 9, pour laquelle ledit capteur LIDAR est disposé sur la nacelle de ladite éolienne.

**Patentansprüche**

1. Verfahren zur Kontrolle und/oder Überwachung eines Windrads, das mit einem LIDAR-Sensor ausgestattet ist, der eine Messung in Bezug auf den Wind an einem stromaufwärts zum Windrad angeordneten Punkt durchführt, bei dem die folgenden Schritte durchgeführt werden:

a) Erfassen eines Signals entsprechend der Messung des LIDAR-Sensors;

b) Konstruieren eines Schätzers des Windes im Bereich des Rotors des Windrads mit Hilfe einer Darstellung des Windes, die ein Frequenzmodell, ausgedrückt in Form eines Von Karman-Spektrums, eines Modells des LIDAR-Sensors, das von mindestens einem Messwinkel ($\theta$, $\phi$) des LIDAR-Sensors und einem Volumenmerkmal des LIDAR-Sensors abhängt, und eines Ausbreitungsmodells des Windes ist, wobei der Windschätzer im Bereich des Rotors ein Filterobjekt mit endlicher Impulsantwort ist, der das Signal des Sensors mit der Geschwindigkeit des Windes im Beriech des Rotors verbindet, wobei die Konstruktion des Windschätzers in zwei Phasen erfolgt: in einer ersten Phase wird die optimale Frequenzantwort des Schätzers berechnet, und in einer zweiten Phase wird die Impulsantwort eines Faltungssystems berechnet wird, das diese Frequenzantwort hat;

c) Schätzen der Geschwindigkeit des Windes im Bereich des Rotors des Windrads, wobei der Windschätzer im Bereich des Rotors am erfassten Signal angewandt wird; und

d) Kontrollieren und/oder Überwachen des Windrads mit Hilfe der geschätzten Geschwindigkeit des Windes.

2. Verfahren nach Anspruch 1, bei dem das Windrad mit Hilfe der Kontrolle des Neigungswinkels der Blätter des Windrads und/oder des elektrischen Rückgewinnungsmoments eines Generators des Windrads kontrolliert wird.

3. Verfahren nach Anspruch 1, bei dem die Überwachung des elektrischen Rückgewinnungsmoments eines Generators des Windrads in Abhängigkeit von der geschätzten Windgeschwindigkeit durchgeführt wird.

4. Verfahren nach Anspruch 3, bei dem die Darstellung des Windes vorher bekannt ist oder in Echtzeit oder willkürlich bestimmt wird.

5. Verfahren nach Anspruch 1, bei dem das Modell des LIDAR-Sensors M(v) im Frequenzbereich durch ein Verhältnis folgender Form geschrieben wird:

$$M(v) = e^{2i\pi v \frac{l_0 \sin(\phi)}{\overline{w}}} L(v)[\sin(\phi) \quad \cos(\phi)\sin(\theta) \quad \cos(\phi)\cos(\theta)] \begin{bmatrix} W_x(v) \\ W_y(v) \\ W_z(v) \end{bmatrix}$$

wobei L(v) die Fourier-Transformierte der Funktion $\bar{f}\left(\tau - \frac{l_0 \sin(\phi)}{\overline{w}}\right)$ und $\bar{f}\left(\tau - \frac{l_0 \sin(\phi)}{\overline{w}}\right) = \frac{K \sin^2(\phi)}{(\tau\overline{w})^2\Gamma^2}$,

$\tau = \frac{l \sin(\phi)}{\overline{w}}$ ist, $l_0$ die Brennweite des LIDAR-Sensors ist, l die Messdistanz ist, $\theta$ und $\phi$ die Ausrichtungswinkel des LIDAR-Sensors sind, w die durchschnittliche Windgeschwindigkeit ist, $\Gamma$ die Rayleigh-Konstante ist, K ein Regulierungsfaktor ist, $W_x$, $W_y$, $W_z$ die Komponenten der Windgeschwindigkeit am Messpunkt sind.

6. Verfahren nach einem der vorhergehenden Ansprüche, bei dem die Frequenzantwort des Windschätzers im Bereich des Rotors F(v) durch ein Verhältnis folgender Form geschrieben wird:

$$F(v) = e^{-2i\pi v \frac{l_0 \sin(\phi)}{\overline{\overline{w}}}} W_1(v) M_R(v)(M_R(v) M_R^{\ T}(v) + \alpha^2)^{-1}$$

mit

$$M_R(v) = L(v)[\sin(\phi) \quad \cos(\phi)\sin(\theta) \quad \cos(\phi)\cos(\theta)] \begin{bmatrix} W_x(v) \\ W_y(v) \\ W_z(v) \end{bmatrix},$$

$$W_l(v) = [W_x(v) \ 0 \ 0]$$

wobei L(v) die Fourier-Transformierte der Funktion

$$\bar{f}\left(\tau - \frac{l_0\sin(\emptyset)}{\bar{w}}\right) \text{ und } \bar{f}\left(\tau - \frac{l_0\sin(\emptyset)}{\bar{w}} = \frac{K\sin^2(\emptyset)}{/\tau\bar{w})^2\Gamma^2}\right., \tau = \frac{l\sin(\emptyset)}{\bar{w}},$$

ist, $l_0$ die Brennweite des LIDAR-Sensors ist, l die Messdistanz ist, $\theta$ und $\phi$ die Ausrichtungswinkel des LIDAR-Sensors sind, w die durchschnittliche Windgeschwindigkeit ist, $\Gamma$ die Rayleigh-Konstante ist, K ein Regulierungsfaktor ist, $W_x$, $W_y$, $W_z$ die Komponenten der Windgeschwindigkeit am Messpunkt sind und $\alpha$ ein Regulierungsparameter ist.

7. Verfahren nach Anspruch 6, bei dem der Windschätzer im Bereich des Rotors mit Hilfe einer Fensterungsmethode konstruiert wird, die an der Frequenzantwort des Windschätzers im Bereich des Rotors angewandt wird.

8. Verfahren nach einem der vorhergehenden Ansprüche, bei dem das Ausbreitungsmodell des Windes nach mindestens einer der folgenden Hypothesen konstruiert wird:

   - der Vektor des Windes ist auf vertikalen Ebenen senkrecht auf die Windrichtung derselbe,
   - die Windturbulenz breitet sich mit der durchschnittlichen Windgeschwindigkeit aus.

9. Windrad, insbesondere Offshore-Windrad, das mit einem LIDAR-Sensor ausgestattet ist, dessen Messpunkt sich stromaufwärts zum Windrad befindet, **dadurch gekennzeichnet, dass** das Windrad Kontrollmittel umfasst, die das Verfahren zur Kontrolle des Windrads nach einem der vorhergehenden Ansprüche einsetzt.

10. Windrad nach Anspruch 9, bei dem der LIDAR-Sensor auf der Windradgondel angeordnet ist.

**Claims**

1. Method for controlling and/or monitoring a wind turbine equipped with a lidar sensor taking a wind-related measurement at a point located upstream of said wind turbine, such that the following steps are carried out:

   a) a signal corresponding to said measurement of said lidar sensor is acquired;
   b) an estimator of the wind at the rotor of the wind turbine is constructed by means of a wind representation that is a frequency-domain model, expressed in the form of a Von Karman spectrum, of a model of said lidar sensor that depends on at least one measurement angle ($\theta, \phi$) of said lidar sensor and on a volumic characteristic of said lidar sensor, and of a wind-propagation model, said estimator of the wind at the rotor being a finite-impulse-response filter object relating the signal of the sensor to the wind speed at the rotor, said wind estimator being constructed in two stages: in a first stage the optimal frequency response of the estimator is computed, and in a second stage the impulse response of a convolution system having this frequency response is computed;
   c) the wind speed at the rotor of said wind turbine is estimated by applying said estimator of the wind at the rotor to said acquired signal; and
   d) said wind turbine is controlled and/or monitored by means of said estimated wind speed.

2. Method according to Claim 1, wherein said wind turbine is controlled by means of control of the angle of inclination of the blades of said wind turbine and/or of the power-takeoff torque of a generator of said wind turbine.

3. Method according to Claim 1, wherein the power-takeoff torque of a generator of said wind turbine is monitored depending on the estimated wind speed.

4. Method according to Claim 3, wherein said wind representation is known beforehand or determined in real time or determined randomly.

5. Method according to Claim 1, wherein said model $M(v)$ of said lidar sensor is written in the frequency domain using a relationship of the form:

$$M(v) = e^{2i\pi v \frac{l_0 sin(\phi)}{\overline{w}}} L(v)[sin(\phi) \ cos(\phi)sin(\theta) \ cos(\phi)cos(\theta)] \begin{bmatrix} W_x(v) \\ W_y(v) \\ W_z(v) \end{bmatrix}$$

where $L(v)$ is the Fourier transform of the function $\overline{f}\left(\tau - \frac{l_0 sin(\phi)}{\overline{w}}\right)$, $\overline{f}\left(\tau - \frac{l_0 sin(\phi)}{\overline{w}}\right) = \frac{K sin^2(\phi)}{(\tau \overline{w})^2 \Gamma^2}$ and

$\tau = \frac{l sin(\phi)}{\overline{w}}$, $l_0$ is the focal length of said lidar sensor, $l$ is the measurement distance, $\theta$ and $\phi$ are the angles of orientation of said lidar sensor, $\overline{w}$ is the average wind speed, $\Gamma$ is the Rayleigh constant, $K$ is an adjustment factor, and $W_x$, $W_y$, $W_z$ are the wind-speed components at said measurement point.

6. Method according to one of the preceding claims, wherein said frequency response F($v$) of said estimator of the wind at the rotor is written using a relationship of the form:

$$F(v) = e^{-2i\pi v \frac{l_0 sin(\phi)}{\overline{w}}} W_l(v) M_R(v) \left(M_R(v) M_R^T(v) + \alpha^2\right)^{-1}$$

where

$$M_R(v) = L(v)[sin(\phi) \ cos(\phi)sin(\theta) \ cos(\phi)cos(\theta)] \begin{bmatrix} W_x(v) \\ W_y(v) \\ W_z(v) \end{bmatrix},$$

$W_l(v)$ = [$W_x(v)$ 0 0], $L(v)$ is the Fourier transform of the function $\overline{f}\left(\tau - \frac{l_0 sin(\phi)}{\overline{w}}\right)$, $\overline{f}\left(\tau - \frac{l_0 sin(\phi)}{\overline{w}}\right) = \frac{K sin^2(\phi)}{(\tau \overline{w})^2 \Gamma^2}$ and $\tau = \frac{l sin(\phi)}{\overline{w}}$, $l_0$ is the focal length of said lidar sensor, $l$ is the measurement distance, $\theta$ and $\phi$ are the angles of orientation of said lidar sensor, $\overline{w}$ is the average wind speed, $\Gamma$ is the Rayleigh constant, $K$ is an adjustment factor, $W_x$, $W_y$, $W_z$ are the wind-speed components at said measurement point, and $\alpha$ is an adjustable parameter.

7. Method according to Claim 6, wherein said estimator of the wind at the rotor is constructed by means of a windowing method applied to said frequency response of said estimator of the wind at the rotor.

8. Method according to one of the preceding claims, wherein said wind-propagation model is constructed under at least one of the following assumptions:

- the wind vector is the same on vertical planes perpendicular to the wind direction,
- wind turbulence propagates at the average wind speed.

9. Wind turbine, in particular an offshore wind turbine, equipped with a lidar sensor the measurement point of which is located upstream of said wind turbine, **characterized in that** said wind turbine comprises control means implementing the method for controlling the wind turbine according to one of the preceding claims.

10. Wind turbine according to Claim 9, wherein said lidar sensor is placed in the nacelle of said wind turbine.

Figure 1

Figure 2

Figure 3

Figure 4

Figure 5

Figure 6a

**Figure 6b**

**Figure 6c**

**Figure 6d**

**Figure 6e**

Figure 6f

Figure 6g

Figure 7a

Figure 7b

Figure 7c

Figure 7d

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2581761 A1
- FR 2976630 A1
- US 20120321463 A

**Littérature non-brevet citée dans la description**

- **LAKS JASON et al.** A spectral model for evaluating the effect of wind evolution on wind turbine preview control. IEEE, 17 Juin 2013